# EUROPÄISCHE PATENTSCHRIFT

(11) **EP 0 777 551 B1**
(45) Veröffentlichungstag und Bekanntmachung des Hinweises auf die Patenterteilung: **18.11.1998**
(21) Anmeldenummer: 95928996.8
(22) Anmeldetag: 29.08.1995
(51) Int. Cl.: B24C 3/32, F16L 58/10

(54) **VERFAHREN ZUR SANIERUNG VON ROHRLEITUNGEN**
PROCESS FOR RENOVATING PIPES
PROCEDE PERMETTANT DE RENOVER DES CANALISATIONS

(30) Priorität: 29.08.1994 DE 4430334
(43) Veröffentlichungstag der Anmeldung: 11.06.1997
(73) Patentinhaber: GEVI Ges. für Entw. und Vertr. ind., zerstörungsfreier und umweltfreundlicher Verf.tech. zur Innensan. von Rohrleitungen mbH, 68165 Mannheim (DE)
(72) Erfinder: REIMELT, Andreas, D-68723 Schwetzingen (DE)
(74) Vertreter: Naumann, Ulrich, Dr.-Ing.
(86) Internationale Anmeldenummer: DE9501152
(87) Internationale Veröffentlichungsnummer: WO9606710

(56) Entgegenhaltungen:
- EP-A- 0 299 134
- EP-A- 0 393 433
- EP-A- 0 551 790
- EP-A- 0 634 229
- GB-A- 2 140 337
- US-A- 3 139 704
- US-A- 3 485 671
- US-A- 4 579 596
- PATENT ABSTRACTS OF JAPAN vol. 7 no. 102 (M-211) [1247] ,30.April 1983 & JP,A,83 022662 (TADASHI OONO) 10.Februar 1983,
- DATABASE WPI Week 9516 Derwent Publications Ltd., London, GB; AN 95-021176 & JP,A,07 040 438 (GET INC ET AL) , 10.Februar 1995
- DATABASE WPI Week 9002 Derwent Publications Ltd., London, GB; AN 90-008421 & DE,A,38 21 558 (WUSTENBERG) , 28.Dezember 1989

## Beschreibung

Die Erfindung betrifft ein Verfahren zur Sanierung von Rohrleitungen, wobei Innenbeläge in der Rohrleitung durch strömende Abrasivmittel entfernt und mit einem viskosen, aushärtenden Beschichtungsmaterial innenbeschichtet werden.

Grundsätzlich sei an dieser Stelle angemerkt, daß es sich bei den zu sanierenden Rohrleitungen um bereits installierte Leitungen handelt, die Gas, Dampf oder Flüssigkeit führen können. So kann es sich bspw. um Zu- und/oder Ablaufleitungen für Wasser oder Gas in Wohn-, Industrie- und Kommunalanlagen handeln, wobei darunter auch Haushalts- und Industrieabwasserleitungen fallen. Sämtliche dieser Leitungen neigen zu Verkrustungen, die vor allem auf Kalkablagerungen aus dem Wasser, auf Rostbildung an der Innenwandung der Leitung, auf Ausscheidungen aus dem Strömungsmedium, auf Reaktionsprodukte zwischen dem Strömungsmedium und mitgeführten Substanzen sowie dem Leitungsmaterial, etc. sowie auf daraus kombinierte Effekte zurückzuführen sind. Die zuvor genannten Erscheinungen führen zu Leckagen oder ganz erheblichen Verringerungen der Rohrinnenquerschnitte, wodurch der Transport des Strömungsmediums gestört, wenn nicht sogar unmöglich gemacht wird.

Das hier beanspruchte Verfahren zur Sanierung von Rohrleitungen hilft eine komplette Erneuerung der Rohrleitung zu vermeiden, was sich insbesondere hinsichtlich komplett installierter Sanitäreinrichtungen als ganz besonders vorteilhaft erweist. Hier sind nämlich die Rohrleitungen nach Entfernen der Armaturen mehr oder weniger frei zugänglich, so daß das beanspruchte Reinigungs- und Beschichtungsverfahren angewendet werden kann. Wesentlich ist jedenfalls, daß eine Rohrleitung an mindestens zwei offenen Enden zugänglich ist, so daß die einzelnen Verfahrensschritte durchführbar sind. Das beanspruchte Verfahren schließt eine zumindest partielle herkömmliche Reparatur der Rohrleitungen nicht aus, so daß komplette Rohrleitungsnetze durchaus auch teilweise erneuert und teilweise nach dem beanspruchten Verfahren saniert werden können.

Verfahren der in Rede stehenden Art sind seit geraumer Zeit aus der Praxis bekannt. Lediglich beispielhaft wird hier auf die europäische Patentschrift 0 299 134 verwiesen. Aus dieser europäischen Patentschrift ist ein gattungsbildendes Verfahren bekannt, wobei das Entfernen der Innenbeläge in der Rohrleitung und das Innenbeschichten der Rohrleitung ausschließlich mittels Druckluft erfolgt. Mit anderen Worten wird nach dem bekannten Verfahren Druckluft als Trägermedium durch die Rohrleitung hindurch gedrückt. Beim Entfernen der Innenbeläge führt die Förderung des Abrasivmittels ausschließlich durch Druckluft gerade bei erheblichen Innenbelägen zu Verstopfungen der Rohrleitung und somit zu einem ganz erheblichen Aufwand zur Beseitigung der Verstopfungen. Per Druckluft weggerissene flächige Teile neigen nämlich gerade in Bogenbereichen zu Anhäufungen, die schließlich zu einem kompletten Zusetzen der Rohrleitung führen.

Das bekannte Verfahren weist des weiteren den ganz erheblichen Nachteil auf, daß sich Leckagen während der Anwendung des Verfahrens bzw. während der Druckluftbeaufschlagung nicht bzw. so gut wie nicht feststellen lassen. Folglich besteht hier die Gefahr, daß trotz enormer Leckagen die Innenbeschichtung durchgeführt wird, wobei ein Schließen der Leckagen nahezu ausgeschlossen ist. Insoweit wird eine große Leckage bzw. ein Loch in der Rohrleitung durch Beschichtung geradezu "veredelt" und kann nicht mehr wirksam geschlossen werden.

Der vorliegenden Erfindung liegt nun die Aufgabe zugrunde, ein Verfahren zur Sanierung von Rohrleitungen anzugeben, wonach eine mit neuen Rohrleitungen vergleichbaren Leitungsqualität mit einfachen technischen Mitteln und unter Vermeidung von Verstopfungen durch abgelöste Innenbeläge während der Behandlung erreicht wird.

Das erfindungsgemäße Verfahren löst die voranstehende Aufgabe durch die Merkmale des Patentanspruches 1. Danach ist das Verfahren zur Sanierung von Rohrleitungen der eingangs genannten Art derart ausgebildet, daß das Abrasivmittel aufgrund eines Druckgefälles in die Rohrleitung hinein, aufgrund eines alternierenden Druckgefälles in der Rohrleitung hin und her und schließlich aufgrund eines Druckgefälles zwischen den beiden Enden der Rohrleitung aus der Rohrleitung heraus gefördert wird.

Erfindungsgemäß ist erkannt worden, daß die voranstehende Aufgabe durch Kombination der Merkmale des Patentanspruches 1 gelöst wird, nämlich dadurch, daß das Abrasivmittel aufgrund eines Druckgefälles in die Rohrleitung hineingefördert wird. Sobald sich eine hinreichende Menge des Abrasivmittels in der Druckleitung befindet, wird der Abrasiveffekt dadurch gefördert, daß das Abrasivmittel aufgrund eines alternierenden Druckgefälles in der Rohrleitung hin und her bewegt wird. Durch diese erfindungsgemäße Maßnahme ist sichergestellt, daß innerhalb der Rohrleitung aufgrund sich lösender Innenbeläge keine Verstopfungen entstehen. Insbesondere im Bereich von Rohrleitungsbögen läßt sich so ein Verstopfen der Rohrleitungen wirksam vermeiden. Die Förderung des Abrasivmittels aufgrund eines alternierenden Druckgefälles, d.h. das Hin- und Herbewegen des Abrasivmittels innerhalb der Rohrleitung, wird solange durchgeführt, bis die Rohrleitung von den Innenbelägen komplett befreit ist, zumindest jedenfalls solange, bis das Abrasivmittel ungehindert durch die Rohrleitung hindurchströmen kann. Ist eine solche Situation einmal erreicht, so läßt sich der weitere "Reinigungsvorgang" auch ohne alternierendes Druckgefälle durch ein einfach vorgegebenes Druckgefälle und die daraus resultierende Förderung des Abrasivmittels durch die Rohrleitung hindurch erreichen. Mit anderen Worten wird schließlich das Abrasivmittel aufgrund eines Druckgefälles zwischen den beiden Enden der Rohrleitung aus der Rohrleitung heraus gefördert, wobei es sich hier um einen kontinuierlichen Vorgang handeln kann, wobei nämlich am einlaßseitigen Ende weiteres Abrasivmittel von der Rohrleitung angesaugt bzw. in die Rohrleitung hineingeblasen werden kann.

Im Rahmen einer besonders vorteilhaften Generierung des Druckgefälles ist es von Vorteil, wenn das Abrasivmittel von einem Ende her durch Unterdruck in die Rohrleitung hinein gefördert wird.

Dabei ist erkannt worden, daß die im Stand der Technik verwendete Druckluft einerseits zu einer Beschädigung der zu sanierenden Rohrleitung führen kann bzw. Verstopfungen in der Rohrleitung hervorruft und andererseits ohne ganz besondere Maßnahmen eine erhebliche Umweltbelastung mit sich bringt, da nämlich die mit Überdruck in die Rohrleitung eingeblasene Druckluft am auslaßseitigen Ende gemeinsam mit Schadstoffen - unter sehr hohen Drücken - in die Umgebung gelangen kann. Besondere Auffang- und Filtervorrichtungen sind demnach unabhängig von bzw. abseits der einlaßseitigen Drucklufterzeugung erforderlich, wodurch der zusätzliche apparative und somit auch kostenmäßige Aufwand erheblich ist. Zusätzliche Einrichtungen abseits der Unterdruckerzeugung sind nach der insoweit vorteilhaften Ausgestaltung nicht mehr erforderlich, da hier nämlich ausschließlich einseitig der Rohrleitung gesaugt und die angesaugte Luft gemeinsam mit Partikeln oder dgl. in einer der Saugeinrichtung vorgeschalteten Einrichtung aufgefangen bzw. aufgenommen wird. Hinzu kommt der ganz besondere Vorteil, daß das Verfahren - bei einseitigem Saugen - von einer Seite der Rohrleitung her durchgeführt werden kann, nämlich auf der Saugseite. Lediglich das viskose Beschichtungsmaterial muß am freien Ende eingegeben werden, wobei dies vor dem Ansaugen erfolgen kann, so daß wiederum eine einzige Bedienungsperson ansaugseitig den eigentlichen Beschichtungsvorgang starten und durchführen kann.

Des weiteren bringt die insoweit vorteilhafte Ausgestaltung des erfindungsgemäßen Verfahrens den ganz erheblichen Vorteil mit sich, daß das saugseitig erzeugte Vakuum zum offenen Ende der Rohrleitung hin abfällt. Folglich werden losgerissene Partikel mit abnehmender Entfernung zum auslaßseitigen bzw. unterdruckseitigen Ende hin stärker mitgerissen, so daß aufgrund des sich zum auslaßseitigen Ende hin einstellenden Druckgefälles Verstopfungen wirksam vermieden sind, da diese nämlich mit abnehmendem Abstand zum auslaßseitigen Ende hin in höherem Maße los- bzw. mitgerissen werden. Schließlich lassen sich nach dem erfindungsgemäßen Verfahren Leckagen dadurch ermitteln, daß sich im Falle einer Leckage am auslaßseitigen Ende ein geringerer Unterdruck einstellt. Tritt dieser Abfall des Unterdrucks schlagartig auf, läßt dies auf ein plötzlich aufgerissenes Loch in der Rohrleitung schließen.

Das Bewegen der Abrasivmittel innerhalb der Rohrleitungen wird in vorteilhafter Weise dadurch generiert, daß das Abrasivmittel durch alternierenden Unterdruck und Überdruck in der Rohrleitung hin und her gefördert wird. Mit anderen Worten wird in der Rohrleitung wechselseitig Unterdruck und Überdruck erreicht, wird nämlich das Abrasivmittel alternierend hindurchgesaugt und hindurchgeblasen. Ebenso ist es jedoch auch denkbar, das Abrasivmittel durch wechselseitigen Unterdruck an beiden Enden der Rohrleitung in der Rohrleitung hin und her zu fördern, wobei dann die voranstehend genannten Vorteile gegeben sind. Schließlich ist es auch denkbar, das Abrasivmittel durch wechselseitigen Überdruck an beiden Enden der Rohrleitung in der Rohrleitung hin und her zu fördern, wobei sich der Überdruck nur dann zur Förderung des Abrasivmittels sinnvoll einsetzen läßt, wenn keine wesentlichen Leckagen in der Rohrleitung vorhanden sind.

Hinsichtlich einer besonders umweltschonenden Durchführung des Verfahrens ist es von Vorteil, wenn die zum Trocknen der Rohrleitung dienende vorgewärmte Luft nicht einfach abgesaugt, sondern vielmehr über eine Filtereinrichtung aus der Rohrleitung heraus bzw. durch die Rohrleitung hindurch gesaugt wird. Dem dazu dienenden Kompressor könnte die Filtereinrichtung direkt vorgeschaltet werden, so daß keine gesonderten Gerätschaften erforderlich sind.

Bei dem zum Entfernen der Innenbeläge dienenden Abrasivmittel könnte es sich um von strömender Luft getragene Partikel jedweder Art handeln, die jedoch härter sein müßten als die zu entfernenden Innenbeläge. Dabei hat es sich insbesondere bei der Sanierung von Wasserleitungen bewährt, daß die Partikel eine Korngröße im Bereich von 0,3 mm und 6 mm aufweisen. Ein spezifisches Gewicht von mehr als 3,0 g/cm³ hat sich ebenfalls als vorteilhaft herausgestellt, wobei in diesem Falle Luft als Trägermedium dient. Im konkreten könnte es sich bei den abrasiv wirkenden Partikeln um Korund oder Quarzsand handeln. Ebenso könnten die abrasiv wirkenden Partikel als Metallteilchen, insbesondere als ferromagnetische Teilchen, ausgeführt sein. Aufgrund solcher Partikel wäre eine anschließende magnetische Trennung der abrasiv wirkenden Partikel von den losgelösten Innenbelägen möglich, die - wie bereits zuvor erwähnt - aus Rost und/oder Kalk bestehen.

Das Aufbringen des Beschichtungsmittels und somit einerseits eine gute Benetzung mit der Innenwandung der Rohrleitung und andererseits ein schnelles anschließendes Aushärten wird ganz besonders dadurch begünstigt, daß die Rohrleitung nach Entfernen der Innenbeläge auf eine über der Raumtemperatur liegende Temperatur aufgeheizt wird. Dabei hat sich eine Temperatur von etwa 40° C ganz besonders bewährt. Das Aufheizen der Rohrleitung könnte wiederum durch Hindurchsaugen aufgeheizter Luft erfolgen, die solange durch die Rohrleitung hindurch gesaugt wird, bis am auslaßseitigen Ende die gewünschte Temperatur erreicht ist. Diese könnte man wiederum über den Temperaturabfall zwischen dem einlaßseitigen Ende und dem auslaßseitigen Ende der Rohrleitung detektieren. Wesentlich ist jedenfalls, daß das Aufheizen der Rohrleitung durch Hindurchsaugen aufgeheizter Luft und nicht etwa durch Hindurchdrücken von Preßluft erfolgt. Schließlich könnte die zum Aufheizen der Rohrleitung dienende vorgewärmte Luft ebenfalls über eine Filtereinrichtung abgesaugt werden, wobei auch diese Filtereinrichtung dem zum Ansaugen dienenden Kompressor direkt vorgeschaltet sein kann.

Des weiteren könnte in ganz besonders vorteilhafter Weise das Aufheizen der Rohrleitung ausschließlich oder zusätzlich durch eine nach dem Reinigen und vor dem Innenbeschichten in die Rohrleitung gesaugte Heizeinrichtung erfolgen. Insoweit wäre das Ansaugen von aufgeheizter Luft nicht zwingend erforderlich, wenn die Kapazität der in die Rohrleitung eingesaugten Heizeinrichtung ausreicht. Jedenfalls könnte die Heizeinrichtung gerade bei extrem langen Rohrleitungen ein Abkühlen der endseitig angesaugten Luft vermeiden, so daß der Aufwärmvorgang ganz erheblich beschleunigt wird. Die dazu verwendete Heizeinrichtung könnte in weiter vorteilhafter Weise als Heizdraht, insbesondere als selbstregelnder Heizdraht, ausgeführt sein. Ein solcher Heizdraht könnte bspw. im Sinne einer Widerstandsheizung mit keramischer Isolation des Heizleiters ausgeführt sein. Grundsätzlich sind hier jedoch sämtliche in eine Rohrleitung einführbare bzw. ansaugbare Einrichtungen anwendbar.

Hinsichtlich einer wirkungsvollen Beheizung der Rohrleitung ist es von weiterem Vorteil, wenn sich der Heizdraht im wesentlichen über die gesamte Länge der Rohrleitung durch diese hindurch erstreckt. Ein gleichmäßiges Aufheizen der Rohrleitung ist somit gewährleistet.

Hinsichtlich des Einbringens des Heizdrahtes ist es von ganz besonderem Vorteil, wenn dieser mittels eines Schleppsystems in die Rohrleitung eingesaugt wird. Als Schleppsystem könnte eine Art Fallschirm oder dgl. dienen, der von der aufgrund des Unterdrucks entstehenden Luftströmung durch die Rohrleitung hindurch erfaßt wird und den Heizdraht mit sich zieht.

Nach hinreichender Aufheizung der Rohrleitung wird der Heizdraht in vorteilhafter Weise - vor der Innenbeschichtung - aus der Rohrleitung wieder heraus gezogen. Dabei könnte der Heizdraht sowohl vom einlaßseitigen Ende her als auch vom auslaßseitigen, d.h. unterdruckseitigen Ende her herausgezogen werden, wobei im letztgenannten Falle die Stromanschlüsse einlaßseitig gelöst werden müßten.

In die aufgeheizte Rohrleitung wird dann das Beschichtungsmaterial eingegeben, wobei auch hier auslaßseitig ein Unterdruck erzeugt wird. Aufgrund dieses Unterdruckes wird das Beschichtungsmaterial gemeinsam mit der Umgebungsluft in die Rohrleitung eingesaugt, wobei aufgrund der unterschiedlichen Viskosität zwischen Luft und dem Beschichtungsmaterial das viskose Beschichtungsmaterial an die Rohrwandung gedrückt wird und dort diese benetzt. Im Falle der Verwendung von Harz bzw. Kunstharz oder Kunststoff als Beschichtungsmaterial ergibt sich eine nahtlose Beschichtung der Innenwandung der Rohrleitung, wobei die zum Einziehen des Beschichtungsmaterials erforderliche Druckdifferenz ausschließlich durch das auslaßseitige Vakuum erzeugt wird.

Im Falle erheblicher Leckagen kann das Beschichtungsmaterial eingelagerte Fasern, insbesondere Kurzfasern, aufweisen, wobei es sich hier in ganz besonders vorteilhafter Weise um Glasfasern handeln kann. Diese Glasfasern würden sich aufgrund der irregulär ausgestalteten Austrittsöffnungen dort querstellen bzw. verhaken und dem viskosen Beschichtungsmaterial einen hinreichenden Halt zum Verstopfen der Leckage vermitteln. Insoweit ließen sich zumindest kleine Löcher verschließen und Leckagen beheben.

Des weiteren wäre es insbesondere zur Vermeidung weiterer Umweltbelastungen bzw. erforderlicher Entsorgungen von ganz besonderem Vorteil, wenn das am freien Ende der Rohrleitung angebrachte Beschichtungsmaterial mengenmäßig derart bemessen wird, daß die Innenwandung der Rohrleitung zwar insgesamt beschichtet wird, daß aber saugseitig keine wesentlichen Mengen an Beschichtungsmaterial aus der Rohrleitung austreten. Mit anderen Worten könnte man aufgrund der sich üblicherweise einstellenden Beschichtungsdicke und der Länge der zu beschichtenden Rohrleitung die erforderliche Menge an Beschichtungsmaterial zumindest in etwa vorgeben, ohne daß saugseitig Mengen des Beschichtungsmaterials austreten und entsprechend entsorgt werden müssen.

Des weiteren könnte nach dem erfindungsgemäßen Verfahren beim endseitigen Saugen das freie Ende der Rohrleitung zumindest zeitweise verschlossen werden, wobei über den sich allmählich einstellenden Unterdruck etwaige Leckagen detektierbar sind. Wird kaum ein Unterdruck erreicht, weist das zu sanierende Leitungssystem eine ganz erhebliche Leckage auf.

Will man die bspw. bereits gereinigte Rohrleitung vor der eigentlichen Beschichtung hinsichtlich ihres Zustandes untersuchen oder will man nach der Beschichtung die Qualität der Beschichtungsmaßnahme überprüfen, könnte hierzu ein optisches Mittel zur Inspektion der Rohrleitung bzw. zur Qualitätskontrolle der Innenbeschichtung in die Rohrleitung ebenfalls eingesaugt werden. Auch hier könnte ein Schleppsystem als Hilfsmittel zum Einsatz kommen. Bei dem optischen Mittel könnte es sich im einfachsten Falle um eine Glasfaserleitung handeln, die einerseits Licht in die Rohrleitung verbringen und andererseits dort reflektierte Lichtstrahlen aus der Rohrleitung heraus führen kann. Glasfaserbündel bzw. unterschiedliche Glasfaserleitungen mit unterschiedlichen Aufgaben könnten vorgesehen sein. Bei ganz besonders anspruchsvoller Ausgestaltung könnte das optische Mittel eine Art Endoskopieeinrichtung umfassen, d.h. eine in die Rohrleitung einsaugbare Miniatur-Kamera mit entsprechender Beleuchtung und sogar mit miniaturisiertem, fernbedienbarem Handwerkszeug zur Probennahme oder dgl..

Abschließend sei besonders hervorgehoben, daß das beanspruchte Verfahren zahlreiche weitere vorteilhafte Verfahrensschritte umfassen kann, ohne von der beanspruchten Lehre gemäß Patentanspruch 1 abzuweichen.

## Patentansprüche

1. Verfahren zur Sanierung von Rohrleitungen, wobei Innenbeläge in der Rohrleitung durch strömende Abrasivmittel entfernt und mit einem viskosen, aushärtenden Beschichtungsmaterial innenbeschichtet werden,
**dadurch gekennzeichnet,** daß das Abrasivmittel aufgrund eines Druckgefälles in die Rohrleitung hinein, aufgrund eines alternierenden Druckgefälles in der Rohrleitung hin und her und schließlich aufgrund eines Druckgefälles zwischen den beiden Enden der Rohrleitung aus der Rohrleitung heraus gefördert wird.

2. Verfahren nach Anspruch 1, dadurch gekennzeichnet, daß das Abrasivmittel von einem Ende her durch Unterdruck in die Rohrleitung hinein gefördert wird.

3. Verfahren nach Anspruch 1 oder 2, dadurch gekennzeichnet, daß das Abrasivmittel durch alternierenden Unterdruck und Überdruck in der Rohrleitung hin und her gefördert wird.

4. Verfahren nach Anspruch 1 oder 2, dadurch gekennzeichnet, daß das Abrasivmittel durch wechselseitigen Unterdruck an beiden Enden der Rohrleitung in der Rohrleitung hin und her gefördert wird.

5. Verfahren nach Anspruch 1 oder 2, dadurch gekennzeichnet, daß das Abrasivmittel durch wechselseitigen Überdruck an beiden Enden der Rohrleitung in der Rohrleitung hin und her gefördert wird.

6. Verfahren nach einem der Ansprüche 1 bis 5, dadurch gekennzeichnet, daß das Beschichtungsmaterial von einem Ende her in die Rohrleitung hinein bzw. durch die Rohrleitung hindurch gesaugt wird.

7. Verfahren nach einem der Ansprüche 1 bis 6, dadurch gekennzeichnet, daß die Rohrleitung vor der Behandlung mit Abrasivmittel mit vorzugsweise vorgewärmter Luft getrocknet und die Luft aufgrund eines Druckgefälles zwischen den beiden Enden durch die Rohrleitung hindurch gefördert wird, wobei die zum Trocknen dienende Luft von einem Ende her in die Rohrleitung hinein und durch die Rohrleitung hindurch gesaugt wird und wobei die zum Trocknen der Rohrleitung dienende, ggf. vorgewärmte Luft über eine Filtereinrichtung abgesaugt wird.

8. Verfahren nach einem der Ansprüche 1 bis 7, dadurch gekennzeichnet, daß es sich bei dem Abrasivmittel um von strömender Luft getragene Partikel handelt, die vorzugsweise eine Korngröße im Bereich zwischen 0,3 mm und 6 mm und ein spezifisches Gewicht größer als 3,0 g/cm³ aufweisen, wobei als Partikel vorzugsweise Korund oder Quarzsand oder Metallteilchen, insbesondere ferromagnetische Teilchen, verwendet werden.

9. Verfahren nach einem der Ansprüche 1 bis 8, dadurch gekennzeichnet, daß die Rohrleitung nach Entfernen der Innenbeläge auf etwa 40° C aufgeheizt wird.

10. Verfahren nach einem der Ansprüche 1 bis 9, dadurch gekennzeichnet, daß das Aufheizen der Rohrleitung durch Hindurchsaugen aufgeheizter Luft erfolgt, wobei die zum Aufheizen der Rohrleitung dienende vorgewärmte Luft über eine Filtereinrichtung abgesaugt wird.

11. Verfahren nach einem der Ansprüche 1 bis 10, dadurch gekennzeichnet, daß das Aufheizen der Rohrleitung ausschließlich oder zusätzlich durch eine nach dem Reinigen und vor dem Innenbeschichten in die Rohrleitung gesaugte Heizeinrichtung erfolgt, wobei die Heizeinrichtung als Heizdraht ausgeführt ist und wobei der Heizdraht mittels eines Schleppsystems in die Rohrleitung eingesaugt wird.

12. Verfahren nach einem der Ansprüche 1 bis 11, dadurch gekennzeichnet, daß das Beschichtungsmaterial gemeinsam mit Luft in die Rohrleitung eingesaugt wird, wobei als Beschichtungsmaterial Harz, vorzugsweise Kunstharz bzw. Kunststoff, vorzugsweise mit eingelagerten Fasern bzw. Glasfasern, verwendet wird.

13. Verfahren nach einem der Ansprüche 1 bis 12, dadurch gekennzeichnet, daß das am freien Ende der Rohrleitung eingebrachte Beschichtungsmaterial mengenmäßig derart bemessen ist, daß die Innenwandung der Rohrleitung beschichtet wird, ohne daß wesentliche Mengen des Beschichtungsmaterials saugseitig aus der Rohrleitung austreten.

14. Verfahren nach einem der Ansprüche 1 bis 13, dadurch gekennzeichnet, daß beim endseitigen Saugen das freie Ende der Rohrleitung zumindest zeitweise verschlossen wird und daß über den sich einstellenden Unterdruck etwaige Leckagen detektiert werden.

15. Verfahren nach einem der Ansprüche 1 bis 14, dadurch gekennzeichnet, daß ein optisches Mittel zur Inspektion der Rohrleitung bzw. zur Qualitätskontrolle der Innenbeschichtung in die Rohrleitung einsaugbar ist, wobei das optische Mittel eine Glasfaserleitung umfaßt und vorzugsweise zumindest im weitesten Sinne als Endoskopieeinrichtung ausgeführt ist.

## Claims

1. Process for renovating pipes, whereas internal deposits in the pipe are removed by flowing abrasives, and whereas an internal coating of a viscous curing material is applied, **characterized in** that as a result of a pressure drop the abrasive is entered into the pipe, caused to reciprocate therein as a result of an alternating pressure drop, and finally made to exit from the pipe as a result of a pressure drop between the two ends of the pipe.

2. Process as in claim 1, characterized in that the abrasive is entered into the pipe from one end by a vacuum.

3. Process as in claim 1 oder 2, characterized in that the abrasive is caused to reciprocate in the pipe by alternating vacuum and overpressure.

4. Process as in claim 1 oder 2, characterized in that the abrasive is caused to reciprocate in the pipe by an alternating vacuum at both ends of the pipe.

5. Process as in claim 1 oder 2, characterized in that the abrasive is caused to reciprocate in the pipe by an alternating overpressure at both ends of the pipe.

6. Process as in one of claims 1-5, characterized in that the coating material is sucked from one end respectively into the pipe and through the pipe.

7. Process as in one of claims 1-6, characterized in that prior to the treatment with abrasive the pipe is dried, preferably with preheated air, and that the air is advanced through the pipe as a result of a pressure drop between the two ends, whereas the air used for drying the pipe is sucked from one end into and through the pipe and whereas the air which is used for drying and is preheated, if need be, is sucked off via a filter device.

8. Process as in one of claims 1-7, characterized in that the abrasive consists of particles which are carried by flowing air, whereas the particles have a grain size in the range from 0,3 mm to 6 mm and a specific weight greater than 3,0 g/cm³, whereas corundum or quartz sand or metallic particles, in particular ferromagnetic particles, is/are used as particles.

9. Process as in one of claims 1-8, characterized in that after removal of the internal deposits the pipe is heated to about 40°C.

10. Process as in one of claims 1-9, characterized in the pipe is heated by sucking therethrough heated air, whereas the preheated air used for heating the pipe is sucked off via a filter device.

11. Process as in one of claims 1-10, characterized in that the heating of the pipe occurs exclusively or additionally by a heating device that is sucked into the pipe after cleaning and before applying the internal coating, whereas the heating device is constructed as a heating wire and whereas the heating wire is sucked into the pipe by means of a tow system.

12. Process as in one of claims 1-11, characterized in that the coating material is sucked into the pipe together with air, whereas a resin, preferably synthetic resin, or plastic is used as coating material and whereas the coating material contains embedded fibers, preferably glass fibers.

13. Process as in one of claims 1-12, characterized in that the quantity of coating material entered at the free end of the pipe is measured such that the inside wall of the pipe is coated, without significant amounts of the coating material exiting from the pipe at the suction side.

14. Method as in one of claims 1-13, characterized in that while suction occurs at one end the free end of the pipe is closed at least temporarily, and that possible leaks are detected by means of the developing vacuum.

15. Method as in one of claims 1-14, characterized in that an optical means can be sucked into the pipe for inspecting the pipe or performing a quality control of the internal coating, whereas the optical means comprises a fiber glass line and whereas the optical means is preferably constructed in the broadest sense as an endoscope.

## Revendications

1. Procédé permettant de rénover des canalisations, où des revêtements intérieurs dans la canalisation sont éliminés par des agents abrasifs en circulation et où les canalisations sont revêtues intérieurement par un revêtement visqueux durcissant,
caractérisé en ce que l'agent abrasif est injecté dans la canalisation au moyen d'un gradient de pression, est mis en circulation au sein de la canalisation dans un sens et dans l'autre au moyen de gradients de pression alternants et enfin est expulsé de la canalisation au moyen d'un gradient de pression entre les deux extrémités de la canalisation.

2. Procédé suivant la revendication 1, caractérisé en ce que l'agent abrasif est injecté dans la canalisation depuis une extrémité sous l'action d'une dépression.

3. Procédé suivant la revendication 1 ou 2, caractérisé en ce que l'agent abrasif est propulsé dans un sens et dans l'autre sous l'action d'une alternance de dépression et de surpression.

4. Procédé suivant la revendication 1 ou 2, caractérisé en ce que l'agent abrasif est propulsé dans un sens et dans l'autre au sein de la canalisation sous l'action de dépressions alternatives aux deux extrémités de la canalisation.

5. Procédé suivant la revendication 1 ou 2, caractérisé en ce que l'agent abrasif est propulsé dans un sens et dans l'autre au sein de la canalisation sous l'action de surpressions alternatives aux deux extrémités de la canalisation.

6. Procédé suivant l'une quelconque des revendications de 1 à 5, caractérisé en ce que le matériau de revêtement est alimenté dans la canalisation par aspiration depuis une extrémité de la canalisation ou est aspiré au travers la canalisation.

7. Procédé suivant l'une quelconque des revendications de 1 à 6, caractérisé en ce qu'avant le traitement par l'agent abrasif, la canalisation est séchée de préférence par de l'air préchauffé et que sous l'effet d'un gradient de pression entre les deux extrémités de la canalisation, l'air est propulsé au sein de la canalisation, l'air servant au séchage étant, depuis une extrémité, aspiré dans la canalisation et au travers de celle-ci, et l'air éventuellement préchauffé servant au séchage étant aspiré au travers un dispositif de filtration.

8. Procédé suivant l'une quelconque des revendications de 1 à 7, caractérisé en ce que l'agent abrasif est constitué par des particules en suspension dans de l'air en circulation, particules qui présentent de préférence une granulométrie dans la fourchette de 0,3 mm et 6 mm et un poids spécifique supérieur à 3,0 g/cm³, les particules utilisées étant de préférence du corindon ou du sable de quartz ou des particules métalliques, en particulier des particules ferromagnétiques.

9. Procédé suivant l'une quelconque des revendications de 1 à 8, caractérisé en ce qu'après l'élimination des revêtements intérieurs, la canalisation est réchauffée à environ 40° C.

10. Procédé suivant l'une quelconque des revendications de 1 à 9, caractérisé en ce que le réchauffement de la canalisation est réalisé par aspiration d'air réchauffé, où l'air réchauffé servant au réchauffement de la canalisation est évacué par aspiration au travers un dispositif de filtration.

11. Procédé suivant l'une quelconque des revendications de 1 à 10, caractérisé en ce que le réchauffement de la canalisation a lieu exclusivement ou en addition au moyen d'un dispositif de chauffage aspiré dans la canalisation après le nettoyage et avant la phase de revêtement intérieur, le dispositif de chauffage ayant la forme d'un fil chauffant et où le fil chauffant est aspiré dans la canalisation à l'aide d'un système de remorquage.

12. Procédé suivant l'une quelconque des revendications de 1 à 11, caractérisé en ce que le matériau de revêtement est aspiré dans la canalisation conjointement avec de l'air, et où en tant que matériau de revêtement est utilisé de la résine, de préférence de la résine synthétiques ou de la matière plastique, de préférence avec des fibres ou de fibres de verre incorporées.

13. Procédé suivant l'une quelconque des revendications de 1 à 12, caractérisé en ce que le matériau de revêtement admis à l'extrémité libre de la canalisation est alimenté en quantité telle que la paroi intérieure de la canalisation est revêtue, sans que des quantités substantielles du matériau de revêtement s'échappent, côté aspiration, de la canalisation.

14. Procédé suivant l'une quelconque des revendications de 1 à 13, caractérisé en ce que dans le cas d'une aspiration à une extrémité, l'extrémité libre de la canalisation est obturée au moins un certain laps de temps et que grâce à la dépression ainsi engendrée peuvent être détectées des fuites éventuelles.

15. Procédé suivant l'une quelconque des revendications de 1 à 14, caractérisé en ce qu'un moyen optique aux fins de l'inspection de la canalisation ou d'un contrôle de qualité peut être aspiré dans la canalisation, ce moyen optique comprenant un conducteur à fibres de verre et ayant de préférence dans le sens le plus large la nature d'un endoscope.
